# EUROPEAN PATENT SPECIFICATION

(11) **EP 0 582 297 B1**
(45) Date of publication and mention of the grant of the patent: **03.01.1996**
(21) Application number: 93112574.4
(22) Date of filing: 05.08.1993
(51) Int. Cl.: F02M 25/08

(54) **Electromagnetic valve for controlling fuel vapour flow in a fuel supply device**
Elektromagnetisches Ventil zur Steuerung einer Brennstoffdampfströmung einer Kraftstoffversorgungseinrichtung
Vanne électromagnétique pour commander un courant de vapeur de carburant dans un dispositif d'alimentation en combustible

(30) Priority: 07.08.1992 IT TO920692
(43) Date of publication of application: 09.02.1994
(73) Proprietor: MAGNETI MARELLI S.p.A., I-20145 Milano (IT)
(72) Inventor: Risi, Giuseppe, I-40100 Bologna (IT); Pasquali, Paolo, I-40100 Bologna (IT); Fargnoli, Gianni, I-40011 Anzola Emilia (IT)
(74) Representative: Jorio, Paolo

(56) References cited:
- EP-A- 0 462 824
- EP-A- 0 534 464
- WO-A-92/01862
- US-A- 3 548 797
- US-A- 5 065 786
- PATENT ABSTRACTS OF JAPAN vol. 15, no. 174 (M-1109)2 May 1991 & JP-A-03 037 368

## Description

The present invention relates to a supply device containing an electromagnetic valve for controlling gas, vapour, or gas-vapour mixture flow, in particular, for controlling fuel vapour flow in a fuel supply device.

The valve contained in the supply device according to the present invention is particularly suitable for use on the circuit connecting the fuel tank to the intake manifold, and which features an additional tank filled with porous material for retaining the fuel vapours from the fuel tank. The valve, operated electromagnetically, is installed between the additional tank and the manifold, and is controlled by the central control system of the supply device so as to open when the engine is started up and so transfer to the supply manifold a controlled quantity of the fuel vapours accumulated in the porous material in the additional tank.

The state of the art in this field is well defined in US-A-3548797 which describes a fuel evaporating preventing device including a fuel absorbtion tank in communication with a fuel bowl of a carburator through a pressure regulating valve incorporated in the carburator.

It is also comprised in the state of the art, pursuant Article 54(3) and (4) EPC, EP-A-0534464 which refers to a valve apt to be fitted between a fuel vapour container connected to a fuel tank and a device for controlling the flow of air supplied to an engine of a autovehicle.

Known valves of the aforementioned type substantially comprise a body, normally made of plastic material, housing an electromagnet, a core, and a movable anchor which is attracted by the core when the electromagnet is energized, and to which is connected a plunger for controlling passage of the vapours through an orifice connecting the inlet and outlet conduits on the valve. The valve is normally fitted by means of brackets and appropriate fasteners to the vehicle body, and is connected to the intake manifold and the additional tank by means of conduits made of deformable material and the ends of which are connected to respective fittings on the valve, manifold and additional tank.

Valves of the aforementioned type present several drawbacks.

Firstly, installation of the valve requires additional components, such as the connecting conduits, brackets and various types of fasteners. Secondly, reliability of the circuit portion to which the valve is fitted is impaired both by possible leakage, due to the numerous connections involved, and by the hydraulic resistance of the circuit portion. Thirdly, installation of the valve involves numerous operations, and requires adequate space and access to certain parts of the supply device. Fourthly, by virtue of their design, known valves are invariably noisy and heavy. And lastly, additional work is required at times on the circuit portion to which the valve is fitted, for eliminating defects which can only be detected when the overall supply device of which the valve forms part is actually tested.

It is an object of the present invention to provide a supply device containing a valve of the above type designed to overcome the aforementioned drawbacks.

According to the present invention, there is provided a supply device containing an electromagnetic valve for controlling gas, vapour, or gas-vapour mixture flow, in particular, fuel vapour flow; the valve substantially comprising a vapour inlet orifice and a vapour outlet orifice communicating with a member of said device, a body housing an annular electromagnet, the inner hole of which houses a core, and a plunger movable between a closed position wherein it closes said outlet orifice, and an open position wherein said orifice is opened; said body comprises a first cylindrical lateral wall housing said electromagnet; characterized by the fact that: said lateral wall has an annular projection projecting from its outer surface; and a second cylindrical lateral wall smaller in diameter than said first wall and housing part of said plunger; said second wall being closed at the bottom by a wall in which said orifice is formed, and being connected to said first wall by an annular wall; said first and second cylindrical lateral walls being inserted inside respective seats formed in said member of said supply device; and said annular projection resting on a surface of said member, for securing the valve to said member.

The valve contained in the present invention will be described by way of example with reference to the accompanying drawings, in which:
Fig.1 shows a vertical section of the valve according to the present invention;

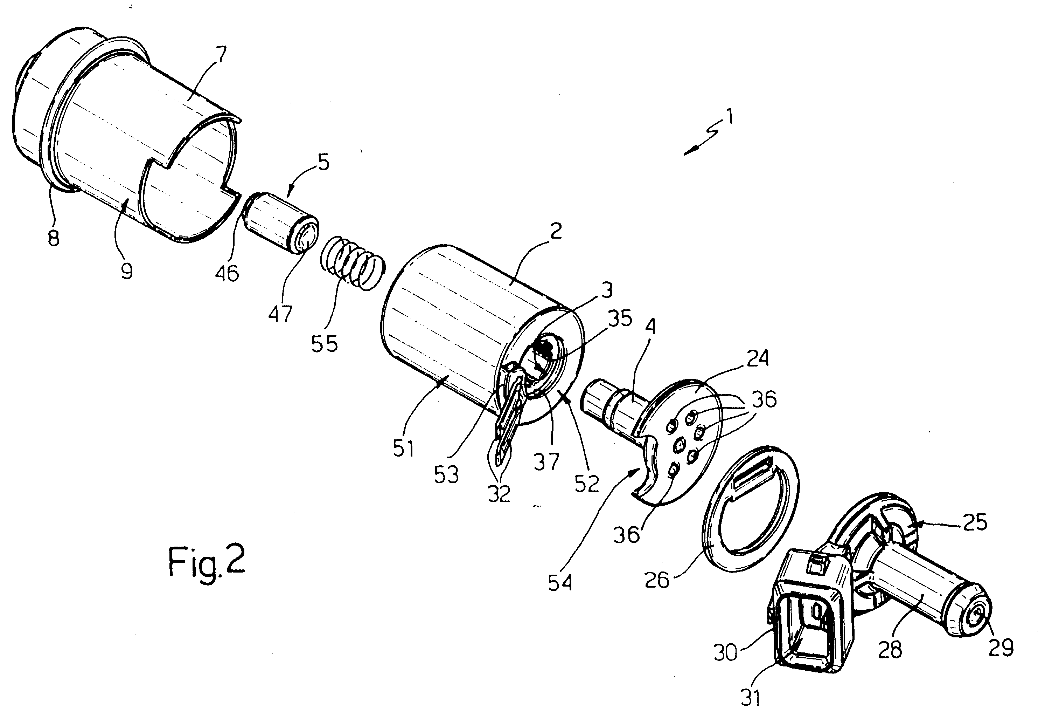

Fig.2 shows an exploded view in perspective of the main components of the valve;
Fig.3 shows a view in perspective of the body of a fuel supply device fitted with the valve according to the present invention;
Fig.4 shows a section of part of the Fig.3 body.

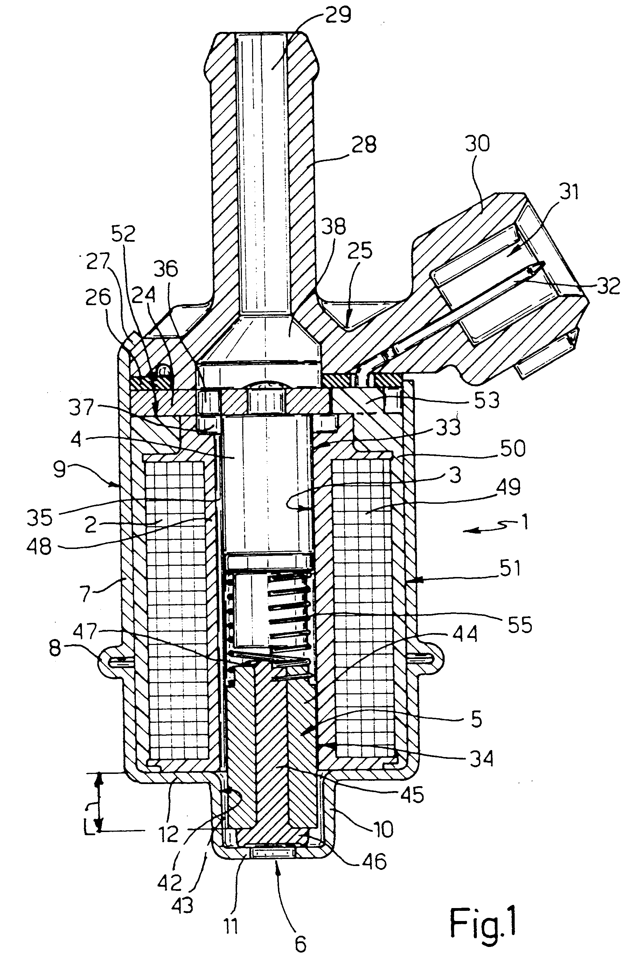

With reference to Fig.1, the valve contained in the present invention substantially comprises a body 1 housing an annular electromagnet 2, the inner hole 3 of which houses a substantially cylindrical core 4, and a plunger 5 movable between a closed position (Fig.1) wherein it closes a vapour outlet orifice 6, and an open position wherein orifice 6 is opened.

According to the present invention, body 1 substantially comprises a first substantially cylindrical lateral wall 7 housing electromagnet 2 and having an annular projection 8 projecting from its outer surface 9; and a second cylindrical lateral wall 10 housing the bottom end of plunger 5. Wall 10 is closed at the bottom by a substantially flat wall 11 in which orifice 6 is formed, and is connected to wall 7 by a substantially flat, annular wall 12. Body 1 is conveniently made of suitably thick sheet metal, and is formed, as shown in Fig.1, by means of a series of permanent deformation, in particular drawing, operations.

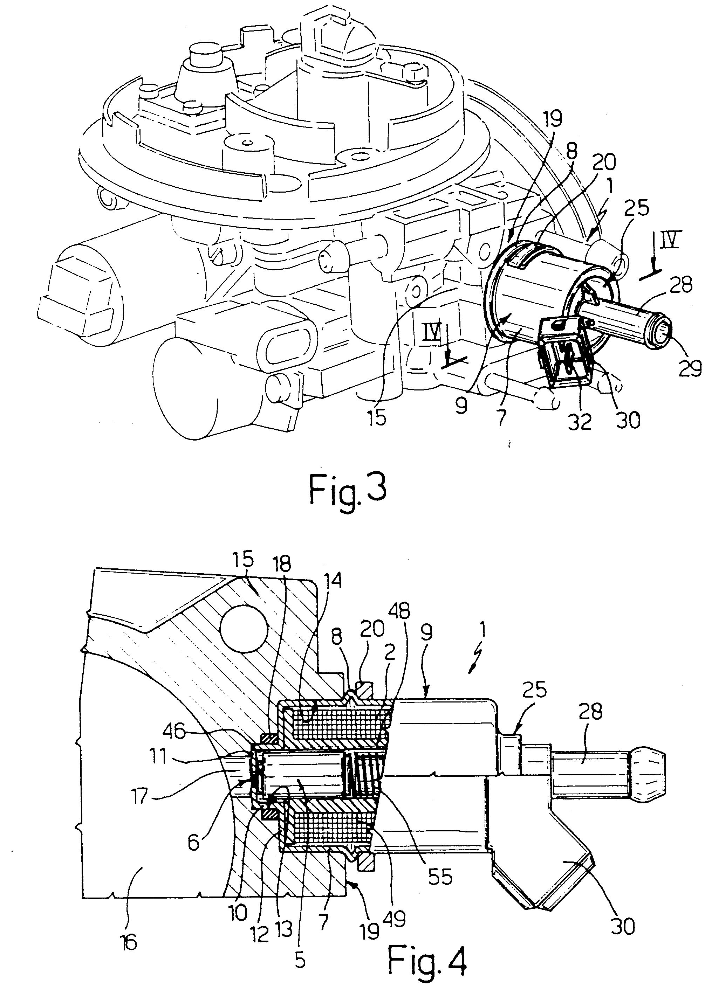

Cylindrical lateral walls 10 and 7 are inserted inside respective cylindrical seats 13 and 14 (Fig.4) formed in a body 15 forming part of the supply device to which the valve is fitted. Body 15 conveniently forms part of a known type of fuel metering and atomizing device, and, in particular, presents a conduit 16 for the air and atomized fuel supplied to the intake manifold on the engine. Seats 13 and 14 communicate with conduit 16 via hole 17.

A sealing ring 18 is conveniently provided between seat 13 and the outer surface of lateral wall 10 of valve body 1.

Annular projection 8 of valve body 1 rests on surface 19 of body 15, to which it is secured by means of an annular plate 20.

The valve contained in the present invention also comprises a disk 24 to which core 4 is fitted (e.g. by means of a rivet) and which rests on electromagnet 2; and a cover 25 resting on disk 24 via the interposition of a sealing ring 26. The top edge 27 of wall 7 of body 1 is permanently deformed on to cover 25 (Fig.1) so as to secure cover 25, ring 26, disk 24 and electromagnet 2 inside body 1.

A sleeve 28 projects from cover 25, and presents a vapour inlet hole 29 coaxial with the valve. Cover 25 also comprises a block 30 in which is formed a seat 31 for rheophores 32 connected to electromagnet 2. Sleeve 28 and block 30 are formed in one piece with cover 25 from suitable thermoplastic material.

The outer surface 33 of core 4 contacts the inner surface of hole 3 of electromagnet 2, while the outer surface 34 of plunger 5 mates in sliding manner with the inner surface of hole 3, so that plunger 5 is guided by hole 3 of electromagnet 2. The surface of hole 3 presents a number of axial grooves 35 enabling passage of the vapour and communicating with inlet hole 29 in sleeve 28, for which purpose disk 24 presents holes 36, electromagnet 2 presents an annular cavity 37 communicating with grooves 35, and hole 29 presents a flared portion 38 by which it communicates with holes 36.

The diameter of inner surface 42 of wall 10 is larger than the diameter of outer surface 34 of plunger 5, so as to form an annular vapour passage 43 between surfaces 42 and 34; and the axis of each groove 35 formed in electromagnet 2 falls within annular passage 43, as shown clearly in Fig.1. For the reasons explained later on, the ratio between the axial length L (Fig.1) and the section of passage 43 ranges between 0.10 and 0.17.

Plunger 5 comprises a tubular metal element 44, the inner hole of which houses a core 45 of deformable elastomeric material. Core 45 presents a first head 46 projecting from the bottom surface of element 44 and designed to close vapour orifice 6; and a second head 47 projecting from the top surface of element 44 and designed to contact core 4. The height of head 47 is substantially equal to the size of the gap required between plunger 5 and core 4 when plunger 5 is in the top limit position.

Electromagnet 2 conveniently comprises a spool 48 on which is formed a winding 49; and a covering 50 defining a cylindrical lateral surface 51, and a flat top surface 52. From surface 52, there extends a projection 53 to which rheophores 32 are fitted, and which is housed inside an opening 54 in disk 24.

Plunger 5 is maintained in the closed position by a coil spring 55.

The valve described operates as follows.

The valve is fitted to the fuel metering and atomizing device by inserting wall 10 and a portion of wall 7 inside respective seats 13 and 14 in body 15 of the device, as shown in Fig.4; and the valve is locked in the above position by fitting annular plate 20 against annular projection 8 and locking the plate by means of any type of connecting member. Vapour outlet orifice 6 of the valve thus communicates with hole 17 in body 15, and sealing between orifice 6 and hole 17 is assured by sealing ring 18.

Sleeve 28 is connected by a hose to the additional tank containing porous material for retaining the fuel vapours from the fuel tank.

When electromagnet 2 is activated, plunger 5 is attracted by core 4, in opposition to the pressure exerted by spring 55, so that head 46 is detached from bottom wall 11 of body 1, and vapour inlet hole 29 communicates with hole 17 (Fig.4) in body 15 via flared portion 38, holes 36 in disk 24, annular cavity 37 and axial grooves 35 in electromagnet 2, and annular passage 43 between plunger 5 and wall 10. The conduit so formed inside the valve presents a large section and very little resistance to fuel vapour flow, by virtue of being substantially axial with no sharp changes in direction. When the ratio between length L and the section of annular passage 43 falls within the aforementioned range of values, this has been found to provide simultaneously for two advantages: very low resistance to the magnetic flux through the magnetic circuit portion formed in the bottom of body 1 and in plunger 5; and very little resistance to fuel vapour flow through annular passage 43.

Head 47 of soft material provides for silent operation of the valve by cushioning impact between plunger 5 and core 4, as well as for achieving an air gap of the right size by preventing direct contact between the plunger and core.

The valve contained in the present invention provides for several major advantages.

By virtue of the valve being incorporated in body 15 of the supply device, the circuit to which the valve is fitted is greatly simplified as compared with that of known valves; the reliability of the circuit is enhanced by virtue of direct connection of the valve and body 15, and the high degree of reliability of the valve itself; the space requirement for the valve and the circuit portion to which it is fitted is considerably reduced, by virtue of the valve being fittable directly to body 15; assembly of the valve to the circuit is fast and straightforward; and operating tests may be conducted on the assembly comprising the supply device and valve.

Finally, the valve is extremely straightforward in design and therefore highly reliable and cheap to produce.

## Claims

1. A supply device containing an electromagnetic valve for controlling gas, vapour, or gas-vapour mixture flow, in particular, fuel vapour flow; the valve substantially comprising a vapour inlet orifice and a vapour outlet orifice communicating with a member (15) of said device, a body (1) housing an annular electromagnet (2), the inner hole (3) of which houses a core (4), and a plunger (5) movable between a closed position wherein it closes said outlet orifice (6), and an open position wherein said orifice (6) is opened; said body (1) comprises a first cylindrical lateral wall (7) housing said electromagnet (2); characterized by the fact that: said lateral wall (7) has an annular projection (8) projecting from its outer surface (9); and a second cylindrical lateral wall (10) smaller in diameter than said first wall (7) and housing part of said plunger (5); said second wall (10) being closed at the bottom by a wall (11) in which said outlet orifice (6) is formed, and being connected to said first wall (7) by an annular wall (12); said first and second cylindrical lateral walls (7, 10) being inserted inside respective seats (13, 14) formed in said member (15) of said supply device; and said annular projection (8) resting on a surface (19) of said member (15), for securing the valve to said member (15).

2. A supply device as claimed in Claim 1, characterized by the fact that it comprises a disk (24) to which said core (4) is fitted, and which rests on said electromagnet (2); and a cover (25) resting on said disk (24) via the interposition of a sealing ring (26); the top edge (27) of said first cylindrical lateral wall (7) being bent on to said cover (25), for securing said cover (25), said sealing ring (26), said disk (24) and said electromagnet (2) to said body (1).

3. A supply device as claimed in Claim 2, characterized by the fact that said cover (25) comprises a sleeve (28) in which is formed a vapour inlet hole (29) coaxial with the valve axis; and a block (30) in which is formed a seat (31) for the rheophores (32) connected to said electromagnet (2); said sleeve (28) and said block (30) being formed in one piece with said cover (25).

4. A supply device as claimed in one of the foregoing Claims, characterized by the fact that the outer surface (33) of said core (4) contacts the inner surface of said hole (3) of said electromagnet (2), and the outer surface (34) of said plunger (5) mates in sliding manner with the inner surface of said hole (3) of said electromagnet (2), so that said plunger (5) is guided by said electromagnet (2); the inner surface of said hole (3) presenting axial grooves (35) enabling passage of the vapour and communicating with said vapour inlet hole (29) in said sleeve (28).

5. A supply device as claimed in Claim 4, characterized by the fact that the diameter of the inner surface (42) of said second wall (10) of said body (1) is greater than that of the outer surface (34) of said plunger (5), so as to form an annular vapour passage (43) between said two surfaces.

6. A supply device as claimed in Claim 5, characterized by the fact that the axis of each said axial groove (35) of said electromagnet (2) falls within said annular passage (43).

7. A supply device as claimed in Claim 5 or 6, characterized by the fact that the ratio between the axial length (L) and the section of said annular passage (43) ranges between 0.10 and 0.17.

8. A supply device as claimed in any one of the Claims 4 to 7, characterized by the fact that said disk (24) presents holes (36), and said electromagnet (2) presents an annular cavity (37) communicating with said axial grooves (35), so that said axial grooves (35) communicate with said hole (29) of said sleeve (28) via said annular cavity (37) and said holes (36) in said disk (24).

9. A supply device as claimed in one of the foregoing Claims, characterized by the fact that said plunger (5) comprises a tubular metal element (44) the inner hole of which houses a core (45) of deformable elastomeric material; said core (45) presenting a first head (46) projecting from the bottom surface of said tubular element (44) and designed to close said vapour orifice (6), and a second head (47) projecting from the top surface of said tubular element (44) and designed to contact said core (4).

10. A supply device as claimed in Claim 9, characterized by the fact that the height of said second head (47) is substantially equal to the size of the gap required between the plunger (5) and core (4).

11. A supply device as claimed in any one of the Claims 2 to 10, characterized by the fact that said electromagnet (2) comprises a spool (48) on which is formed a winding (49); and a covering (50) defining a cylindrical lateral surface (51) and a flat top surface (52); a projection (53) extending from said top surface (52) and being fitted with said rheophores (32); and said disk (24) presenting an opening (54) for housing said projection (53).

## Patentansprüche

1. Versorgungsvorrichtung mit einem elektromagnetischen Ventil zum Steuern einer Gas-, Dampf- oder Gasdampfgemischströmung, insbesondere einer Brennstoffdampfströmung; wobei das Ventil im wesentlichen eine Dampfeinlaßöffnung und eine Dampfauslaßöffnung, die mit einem Element (15) der Vorrichtung in Verbindung steht, einen Körper (1), der einen ringförmigen Elektromagneten (2) aufnimmt, dessen inneres Loch (3) einen Kern (4) aufnimmt, sowie einen Kolben (5) aufweist, der zwischen einer geschlossenen Position, in der er die Auslaßöffnung (6) verschließt, und einer geöffneten Position beweglich ist, in der die Öffnung (6) geöffnet ist; wobei der Körper (1) eine erste zylindrische Seitenwand (7) aufweist, die den Elektromagneten (2) aufnimmt, dadurch gekennzeichnet, daß:
die Seitenwand (7) einen von ihrer Außenfläche (9) vorstehenden, ringförmigen Vorsprung (8) aufweist; sowie durch eine zweite zylindrische Seitenwand (10), deren Durchmesser kleiner als derjenige der ersten Wand (7) ist und die einen Teil des Kolbens (5) aufnimmt; wobei die zweite Wand (10) am Boden durch eine Wand (11) geschlossen ist, in der die Auslaßöffnung (6) gebildet ist, und durch eine ringförmige Wand (12) mit der ersten Wand (7) verbunden ist; wobei die erste und zweite zylindrische Seitenwand (7, 10) in Sitze (13 bzw. 14) eingefügt sind, die in dem Element (15) der Versorgungsvorrichtung gebildet sind; und der ringförmige Vorsprung (8) an einer Fläche (19) des Elements (15) anliegt, um das Ventil an dem Element (15) zu befestigen.

2. Versorgungsvorrichtung nach Anspruch 1, dadurch gekennzeichnet, daß sie eine Scheibe (24) aufweist, an der der Kern (4) eingepaßt ist und die an dem Elektromagneten anliegt; sowie eine Abdeckung (25), die an der Scheibe (24) über einen dazwischen angeordneten Dichtungsring (26) anliegt; wobei die Oberkante (27) der ersten zylindrischen Seitenwand (7) zu der Abdeckung (25) gebogen ist, um die Abdeckung (25), den Dichtungsring (26), die Scheibe (24) und den Elektromagneten (2) an dem Körper (1) zu befestigen.

3. Versorgungsvorrichtung nach Anspruch 2, dadurch gekennzeichnet, daß die Abdeckung (25) eine Hülse (28), in der ein Dampfeinlaßloch (29) koaxial zur Ventilachse gebildet ist, sowie einen Block (30) aufweist, in dem ein Sitz (31) für die mit dem Elektromagneten (2) verbundenen Rheophoren (32) gebildet ist; wobei die Hülse (28) und der Block (30) in einem Stück mit der Abdeckung (25) gebildet sind.

4. Versorgungsvorrichtung nach einem der vorhergehenden Ansprüche, dadurch gekennzeichnet, daß die Außenfläche (33) des Kerns (4) mit der Innenfläche des Lochs (3) des Elektromagneten (2) in Kontakt steht und die Außenfläche (34) des Kolbens (5) gleitend zu der Innenfläche des Lochs (3) des Elektromagneten (2) paßt, so daß der Kolben (5) durch den Elektromagneten (2) geführt wird; wobei die Innenfläche des Lochs (3) axiale Nuten (35) aufweist, die den Durchgang von Dampf ermöglichen und mit dem Dampfeinlaßloch (29) in der Hülse (28) in Verbindung stehen.

5. Versorgungsvorrichtung nach Anspruch 4, dadurch gekennzeichnet, daß der Durchmesser der Innenfläche (42) der zweiten Wand (10) des Körpers (1) größer als derjenige der Außenfläche (34) des Kolbens (5) ist, so daß ein ringförmiger Dampfdurchgang (43) zwischen den beiden Flächen gebildet ist.

6. Versorgungsvorrichtung nach Anspruch 5, dadurch gekennzeichnet, daß die Achse jeder axialen Nut (35) des Elektromagneten (2) in dem ringförmigen Durchgang (43) liegt.

7. Versorgungsvorrichtung nach Anspruch 5 oder 6, dadurch gekennzeichnet, daß das Verhältnis zwischen der axialen Länge (L) und dem Querschnitt des ringförmigen Durchgangs (43) im Bereich zwischen 0,10 und 0,17 liegt.

8. Versorgungsvorrichtug nach einem der Ansprüche 4 bis 7, dadurch gekennzeichnet, daß die Scheibe (24) Löcher (36) aufweist, und daß der Elektromagnet (2) einen ringförmigen Hohlraum (37) aufweist, der mit den axialen Nuten (35) in Verbindung steht, so daß die axialen Nuten (35) über den ringförmigen Hohlraum (37) und die Löcher (36) in der Scheibe (24) mit dem Loch (29) der Hülse (28) in Verbindung stehen.

9. Versorgungsvorrichtung nach einem der vorhergehenden Ansprüche, dadurch gekennzeichnet, daß der Kolben (5) ein rohrförmiges Metallelement (44) aufweist, dessen inneres Loch einen Kern (45) aus verformbarem Elastomermaterial aufnimmt; wobei der Kern (45) einen ersten Kopf (46), der von der Bodenfläche des rohrförmigen Elements (44) vorsteht und zum Schließen der Dampföffnung (6) ausgelegt ist, sowie einen zweiten Kopf (47) aufweist, der von der oberen Fläche des rohrförmigen Elements (44) vorsteht und dazu ausgelegt ist, mit dem Kern (4) in Kontakt zu treten.

10. Versorgungsvorrichtung nach Anspruch 9, dadurch gekennzeichnet, daß die Höhe des zweiten Kopfs (47) im wesentlichen gleich der Größe des zwischen dem Kolben (5) und (4) erforderlichen Spalts ist.

11. Versorgungsvorrichtung nach einem der Ansprüche 2 bis 10, dadurch gekennzeichnet, daß der Elektromagnet (2) eine Spule (48), an der eine Wicklung (49) gebildet ist, sowie eine Abdeckung (50) aufweist, die eine zylindrische Seitenfläche (51) und eine flache obere Fläche (52) bildet; wobei sich ein Vorsprung (53) von der oberen Fläche (52) erstreckt und mit den Rheophoren (32) versehen ist; und wobei die Scheibe (24) eine Öffnung (54) zur Aufnahme des Vorsprungs (53) aufweist.

## Revendications

1. Un dispositif d'alimentation comprenant une vanne électromagnétique pour la commande d'un courant de gaz, de vapeur, ou d'un mélange gaz-vapeur, notamment d'un courant de vapeur de combustible, la vanne comprenant essentiellement un orifice d'entrée de vapeur et un orifice de sortie de vapeur communiquant avec un élément (15) dudit dispositif, un corps (1) logeant un électroaimant annulaire (2) dont le trou interne (3) loge un noyau (4) et un plongeur (5) mobile entre une position fermée dans laquelle il ferme ledit orifice de sortie (6) et une position ouverte dans laquelle ledit orifice (6) est ouvert, ledit corps (1) comprend une première paroi latérale cylindrique (7) logeant ledit électroaimant (2), caractérisé en ce que: ladite paroi latérale (7) comprend un prolongement annulaire (8) faisant saillie de sa surface extérieure (9) et une deuxième paroi latérale cylindrique (10) plus petite en diamètre que ladite première paroi (7) et logeant une partie dudit plongeur (5), ladite deuxième paroi (10) étant fermée au fond par une paroi (11) dans laquelle ledit orifice de sortie (6) est formé et étant reliée à ladite première paroi (7) par une paroi annulaire (12); lesdites première et deuxième parois latérales cylindriques (7, 10) étant insérées à l'intérieur de sièges respectifs (13, 14) formés dans ledit élément (15) dudit dispositif d'alimentation et ledit prolongement annulaire (8) reposant sur une surface (19) dudit élément (15) pour fixer la vanne audit élément (15).

2. Un dispositif d'alimentation suivant la revendication 1, caractérisé en ce qu'il comprend un disque (24) auquel ledit noyau (4) est adapté et qui repose sur ledit électroaimant (2) et un couvercle (25) reposant sur ledit disque (24) par l'intermédiaire de l'interposition d'une bague d'étanchéité (26), le bord supérieur (27) de ladite première paroi latérale cylindrique (7) étant cintré sur ledit couvercle (25), pour fixer ledit couvercle (25), ladite bague d'étanchéité (26), ledit disque (24) et ledit électroaimant (2) audit corps (1).

3. Un dispositif d'alimentation suivant la revendication 2, caractérisé en ce que ledit couvercle (25) comprend un manchon (28) dans lequel est formé un trou d'entrée de vapeur (29) coaxial à l'axe de la vanne et un bloc (30) dans lequel est formé un siège (31) pour les rhéophores (32) reliés audit électroaimant (2), ledit manchon (28) et ledit bloc (30) étant formés d'une seule pièce avec ledit couvercle (25).

4. Un dispositif d'alimentation selon l'une des revendications précédentes, caractérisé en ce que la surface extérieure (33) dudit noyau (4) vient au contact de la surface intérieure dudit trou (3) dudit électroaimant (2) et la surface extérieure (34) dudit plongeur (5) s'adapte à coulissement avec la surface intérieure dudit trou (3) dudit électroaimant (2) si bien que ledit plongeur (5) est guidé par ledit électroaimant (2), la surface intérieure dudit trou (3) présentant des gorges axiales (35) permettant le passage de la vapeur et communiquant avec ledit trou d'entrée de vapeur (29) dans ledit manchon (28).

5. Un dispositif d'alimentation selon la revendication 4, caractérisé en ce que le diamètre de la surface intérieure (42) de ladite deuxième paroi (10) dudit corps (1) est supérieur à celui de la surface extérieure (34) dudit plongeur (5) de façon à former un passage de vapeur annulaire (43) entre lesdites deux surfaces.

6. Un dispositif d'alimentation selon la revendication 5, caractérisé en ce que l'axe de chaque gorge axiale (35) dudit électroaimant (2) rentre dans ledit passage annulaire (43) .

7. Un dispositif d'alimentation selon la revendication 5 ou 6, caractérisé en ce que le rapport entre la longueur axiale (L) et la section dudit passage annulaire (43) se situe dans la gamme entre 0,10 et 0,17.

8. Un dispositif d'alimentation selon l'une quelconque des revendications 4 à 7, caractérisé en ce que ledit disque (24) présente des trous (36) et ledit électroaimant (2) présente une cavité annulaire (37) communiquant avec lesdites gorges axiales (35) si bien que lesdites gorges axiales (35) communiquent avec ledit trou (29) dudit manchon (28) par l'intermédiaire de ladite cavité annulaire (37) et desdits trous (36) dans ledit disque (24) .

9. Un dispositif d'alimentation selon l'une des revendications précédentes, caractérisé en ce que ledit plongeur (5) comprend un élément métallique tubulaire (44) dont le trou intérieur loge un noyau (45) en matériau élastomère déformable, ledit noyau (45) présentant une première tête (46) se prolongeant à partir de la surface de fond dudit élément tubulaire (44) et agencée pour fermer ledit orifice de vapeur (6) et une deuxième tête (47) se plongeant à partir de la surface de dessus dudit élément tubulaire (44) et conçue pour venir au contact dudit noyau (4).

10. Un dispositif d'alimentation selon la revendication 9, caractérisé en ce que la hauteur de ladite deuxième tête (37) est essentiellement égale à la dimension de l'espace requis entre le plongeur (5) et le noyau (4).

11. Un dispositif d'alimentation selon l'une quelconque des revendications 2 à 10, caractérisé en ce que ledit électroaimant (2) comprend un tiroir (48) sur lequel est formé un enroulement (49) et une couverture (50) définissant une surface latérale cylindrique (51) et une surface de dessus plane (52), un prolongement (53) s'étendant à partir de ladite surface de dessus (52) et étant adapté avec lesdits rhéophores (32), et ledit disque (24) présentant une ouverture (54) pour loger ledit prolongement (53).
